# EUROPEAN PATENT APPLICATION

(11) **EP 4 779 491 A1**
(43) Date of publication of application: **22.07.2026**
(21) Application number: 24864369.4
(22) Date of filing: 14.08.2024
(51) Int. Cl.: G06F 16/432, H04N 21/439

(54) **VIDEO PROCESSING METHOD AND APPARATUS, AND TERMINAL DEVICE**

(30) Priority: 14.09.2023 CN 202311191337
(71) Applicant: Beijing Zitiao Network Technology Co., Ltd., Beijing 100190 (CN); Lemon Inc., Grand Cayman, KY1-1205 (KY)
(72) Inventor: CHU, Shuting, Beijing 100028 (CN); JIN, Angel, Los Angeles California 90066 (US); SHAHNAWAZ, Amer, Culver City California 90230 (US); GAO, Xiaohan, Culver City California 90230 (US)
(74) Representative: Marks & Clerk LLP
(86) International application number: PCT/CN2024/111972
(87) International publication number: WO 2025/055646

(57) **Abstract**

A video processing method and apparatus, and a terminal device. The method comprises: on the basis of a first application, displaying a first video, the first video comprising a banner window, and the banner window being associated with a first audio published in a second application; in response to a touch operation on the banner window, displaying a playback page of the first audio in the first application; and playing the first audio.

## Description

### CROSS-REFERENCE TO RELATED APPLICATION

The present application claims priority to Chinese Patent Application No. 202311191337.0, filed on September 14, 2023, which is incorporated herein by reference in its entirety as a part of the present application.

### TECHNICAL FIELD

Embodiments of the present disclosure relate to the field of video processing technologies, and in particular to a video processing method and apparatus, and a terminal device.

### BACKGROUND

Short videos are an emerging manner of internet content dissemination. Users can play short videos by using terminal devices and obtain more information based on the short videos.

Currently, creators can post short videos in short video applications, and users can browse these videos in the short video applications by terminal devices. However, the short video applications cannot play audios posted by the creators in other applications, so how to play the audios from other applications in the short video applications is an urgent technical problem that needs to be solved.

### SUMMARY

Embodiments of the present disclosure provide a video processing method and apparatus, and a terminal device, so as to solve one or more technical problems in the prior art.

First aspect, an embodiment of the present disclosure provides a video processing method, and the method includes:
displaying a first video based on a first application, where the first video includes a banner window, and the banner window is associated with a first audio posted in a second application;
displaying a playback page of the first audio in the first application in response to a touch operation on the banner window; and
playing the first audio.

Second aspect, an embodiment of the present disclosure provides a video processing apparatus, and the video processing apparatus includes a display module, a response module, and a playback module, where
the display module is configured to display a first video based on a first application, where the first video includes a banner window, and the banner window is associated with a first audio posted in a second application;
the response module is configured to: display a playback page of the first audio in the first application in response to a touch operation on the banner window; and
the playback module is configured to play the first audio.

Third aspect, an embodiment of the present disclosure provides an electronic device including: a processor and a memory, where
the memory stores computer-executable instructions, and
the processor executes the computer-executable instructions stored in the memory, to cause the at least one processor to perform the video processing method according to the first aspect and various video processing methods possibly related to the first aspect.

Fourth aspect, an embodiment of the present disclosure provides a computer-readable storage medium, and computer-executable instructions are stored in the computer-readable storage medium, when the computer-executable instructions are executed by a processor, the video processing method according to the first aspect and various video processing methods possibly related to the first aspect is implemented.

The embodiments of the present disclosure provide the video processing method and apparatus, and the terminal device. The terminal device may display the first video based on the first application, where the first video includes the banner window, and the banner window is associated with the first audio posted in the second application. Displaying the playback page of the first audio in the first application in response to a touch operation on the banner window, and playing the first audio. In the above-mentioned method, because the first video can include the banner window associated with the first audio, when the user taps the banner window, the first application can play the first audio posted in the second application, without the need for the user to switch to the second application to play the first audio, so as to reduce the operational complexity of playing the first audio and enhance the user experience.

### BRIEF DESCRIPTION OF DRAWINGS

In order to describe the technical solutions in embodiments of the present disclosure or in the related art more clearly, the accompanying drawings required for describing the embodiments or the related art are briefly described below. Apparently, the accompanying drawings in the following description are some embodiments of the present disclosure, and those of ordinary skill in the art may still derive other accompanying drawings from these accompanying drawings without creative efforts.
FIG. 1 is a schematic diagram of an application scenario according to an embodiment of the present disclosure;
FIG. 2 is a schematic flowchart of a video processing method according to an embodiment of the present disclosure;
FIG. 3 is a schematic diagram of displaying a first video according to an embodiment of the present disclosure;
FIG. 4 is another schematic diagram of displaying a first video according to an embodiment of the present disclosure;
FIG. 5 is a schematic diagram of a process of displaying a playback page according to an embodiment of the present disclosure;
FIG. 6 is a schematic diagram of playing a first audio according to an embodiment of the present disclosure;
FIG. 7 is a schematic diagram of a method of generating a first video according to an embodiment of the present disclosure;
FIG. 8 is a schematic diagram of a process of displaying a first audio according to an embodiment of the present disclosure;
FIG. 9 is a schematic diagram of a process of generating a first video according to an embodiment of the present disclosure;
FIG. 10 is a schematic diagram of a process of a video processing method according to an embodiment of the present disclosure;
FIG. 11 is a schematic structural diagram of a video processing apparatus according to an embodiment of the present disclosure; and
FIG. 12 is a schematic structural diagram of a terminal device according to an embodiment of the present disclosure.

### DETAILED DESCRIPTION

Exemplary embodiments are described in detail herein in conjunction with the accompanying drawings. When the following description relates to the accompanying drawings, the same numerals in different accompanying drawings denote the same or similar elements, unless otherwise indicated. The implementations described in the following exemplary embodiments do not represent all the implementations consistent with the present disclosure.

It should be understood that the various steps described in the method implementations of the present disclosure may be performed in different orders, and/or performed in parallel. Furthermore, additional steps may be included and/or the execution of the illustrated steps may be omitted in the method implementations. The scope of the present disclosure is not limited in this respect.

The term "include" and variants thereof used herein indicate open inclusion, that is, "include but are not limited to". The term "based on" is "at least partially based on". The term "an embodiment" means "at least one embodiment". The term "another embodiment" means "at least one another embodiment". The term "some embodiments" means "at least some embodiments". Related definitions of the other terms will be given in the description below.

It should be noted that concepts such as "first" and "second" mentioned in the present disclosure are only used to distinguish different apparatuses, modules, or units, and are not used to limit the sequence of functions performed by these apparatuses, modules, or units or interdependence.

For ease of understanding, concepts involved in the embodiments of the present disclosure are described below.

Terminal device: a device with a wireless transceiver function. The terminal device may be deployed on land, including indoors or outdoors, handheld, wearable, or vehicle-mounted. The terminal device may be a mobile phone, a tablet computer (Pad), a computer having a wireless transceiver function, a virtual reality (VR) terminal device, an augmented reality (AR) terminal device, a wireless terminal in industrial control, a vehicle-mounted terminal device, a wireless terminal in self driving, a wireless terminal device in remote medical, a wireless terminal device in a smart grid, a wireless terminal device in transportation safety, a wireless terminal device in a smart city, a wireless terminal device in a smart home, a wearable terminal device, etc. The terminal device in the embodiments of the present disclosure may also be referred to as a terminal, user equipment (UE), an access terminal device, a vehicle-mounted terminal, an industrial control terminal, a UE unit, a UE station, a mobile station, a mobile console, a remote station, a remote terminal device, a mobile device, a UE terminal device, a wireless communication device, a UE agent, a UE apparatus, etc. The terminal device may be stationary or mobile.

In the related art, short videos are an emerging manner of internet content dissemination. Users can play short videos based on terminal devices and obtain more information based on the short videos. Based on the characteristics of short videos, the content dissemination efficiency of short videos is high. Currently, creators can post short videos in short video applications, and users can browse the videos posted by the creators in the short video applications. For example, a user can open a profile page of a creator in the short video application and browse videos posted by the creator on the profile page of the creator. However, the short video applications cannot play audios posted by the creator in other applications. For example, the creator posts a video in the short video application, and posts an audio in an audio application. During the process of the user browsing the video based on the short video application, if the user wants to browse the audio in the audio application, the user needs to open the audio application in a terminal device and play the audio in the audio application. This results in a higher operational complexity of playing the audio.

In order to solve the technical problems in the related art, an embodiment of the present disclosure provides a video processing method. A terminal device may bind a first audio to at least one video posted by a posting user of the first video in a first application, to obtain at least one first video. The first audio is an audio posted by a video posting user in a second application. The terminal device may display the first video based on the first application, where the first video includes a banner window that is associated with the first audio. The terminal device may display a playback page of the first audio in the first application in response to a touch operation on the banner window. The terminal device may play the first audio. In this way, based on the touch operation of the user on the banner window, the terminal device can directly play the audio from the second application in the first application, without the need for the user to open the second application on the terminal device to play the first audio, thereby reducing the operational complexity of playing the first audio.

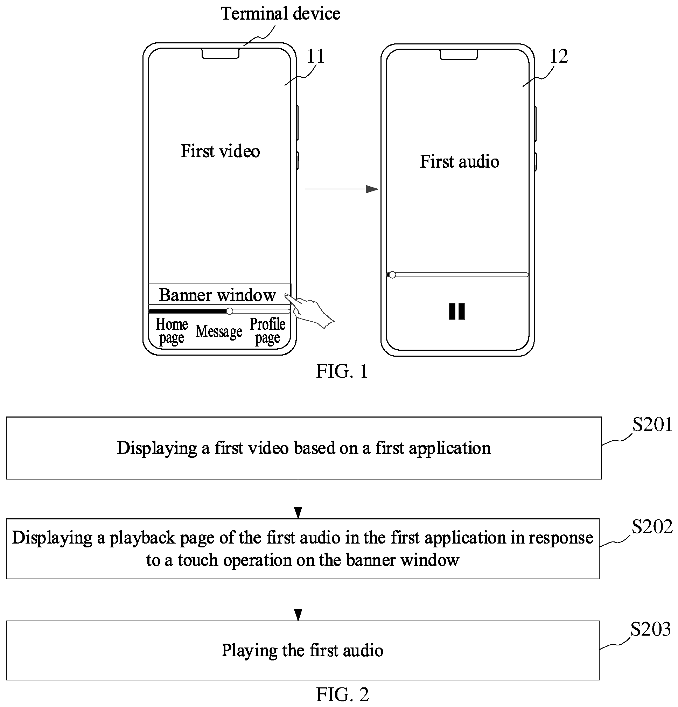

An application scenario of an embodiment of the present disclosure is described below with reference to FIG. 1.

FIG. 1 is a schematic diagram of an application scenario according to an embodiment of the present disclosure. Referring to FIG. 1, the application scenario includes a terminal device. For example, a display page of the terminal device is a video playback page 11. The video playback page 11 may include a first video that is being played. The first video may include a banner window. When a user taps the banner window, the display page of the terminal device jumps from the video playback page 11 to an audio playback page 12. The audio playback page may include a playback control and a first audio. When the terminal device displays the audio playback page 12, the terminal device can play the first audio. In this way, the user can directly play the first audio on the terminal device based on the touch operation on the banner window of the first video, without the need to open an audio playback application, thereby reducing the operational complexity of playing the first audio and enhancing the user experience.

It should be noted that FIG. 1 is merely an exemplary illustration of an application scenario of the embodiments of the present disclosure, but the application scenarios of the embodiments of the present disclosure are not limited thereto.

The technical solutions of the present disclosure and how the technical solutions of the present disclosure solve the above technical problem are described below in detail with exemplary embodiments. The following several exemplary embodiments may be combined with each other, and details about same or similar concepts or processes may not be described in some embodiments again. The embodiments of the present disclosure are described below with reference to the accompanying drawings.

FIG. 2 is a schematic flowchart of a video processing method according to an embodiment of the present disclosure. Referring to FIG. 2, the method may include the following steps.

S201: displaying a first video based on a first application.

An execution body of embodiments of the present disclosure may be a terminal device or may be a video processing apparatus provided in the terminal device. The video processing apparatus may be implemented based on software, or the video processing apparatus may be implemented based on a combination of software and hardware. The embodiments of the present disclosure are not limited thereto.

For example, the first application may be a video playback application. For example, the first application may be a short video playback application or any application with a video playback function, and the embodiments of the present disclosure are not limited thereto.

For example, the first video may be a video that is played in the first application. For example, the first video may include a banner window, and the banner window is associated with the first audio posted in the second application. For example, the first application may include a window displayed in the form of a banner, and the window is associated with the first audio posted in the second application.

For example, the second application may be an audio playback application. For example, the second application may be a music application or any application with an audio playback function, and the embodiments of the present disclosure are not limited thereto.

For example, the first audio may be an audio posted by a creator in the second application. For example, after a music creator creates music, the music creator can post the music on a profile page of the music creator of the music application.

Optionally, the banner window in the first video may be associated with one first audio. For example, if the first video includes a banner window 1 and a banner window 2, the banner window 1 may be associated with an audio A, and the banner window 2 may be associated with the audio A, or the banner window 2 may be associated with an audio B. The embodiments of the present disclosure are not limited thereto.

Optionally, the banner window may be located at the bottom of the first video. For example, the banner window may be located at the bottom of the first video. In this way, the user can conveniently operate the terminal device with one hand to play the first audio, thereby reducing the operational complexity of playing the first audio and enhancing the user experience.

It should be noted that the banner window may also be located at any position in the first video, and the embodiments of the present disclosure are not limited thereto.

Optionally, the banner window includes audio information associated with the first audio. For example, the audio information may include text information associated with the first audio. For example, the audio information may be a name of the first audio, information about the creator of the first audio, a brief introduction to the first audio, etc., and the embodiments of the present disclosure are not limited thereto. For example, the banner window may include the name of the first audio. Based on the name, the user can further understand audio information of the first audio and then accurately determine whether the first audio needs to be played, thereby enhancing the user experience.

It should be noted that the banner window may also include any information associated with the first audio, such as text, images, etc., but the embodiments of the present disclosure are not limited thereto.

Optionally, the terminal device may display the first video based on the first application according to the following two feasible implementations.

One feasible implementation is as follows.

The terminal device may display a video favorites page in the first application and display the first video in the first application in response to a touch operation on the first video on the video favorites page. For example, the video favorites page may include a plurality of videos that are favorited by the user. For example, each short video that is played in the short video application may include a favorite control. After the user taps the favorite control of the video, the video can be added to the favorites page of the user.

Optionally, the video favorites page may include the first video. After the user taps the first video, the terminal device can display the first video in the first application. For example, the video favorites page may include a video A, a video B, and a video C. If the video A is the first video, the terminal device can play the video A in the first application after the user taps the video A.

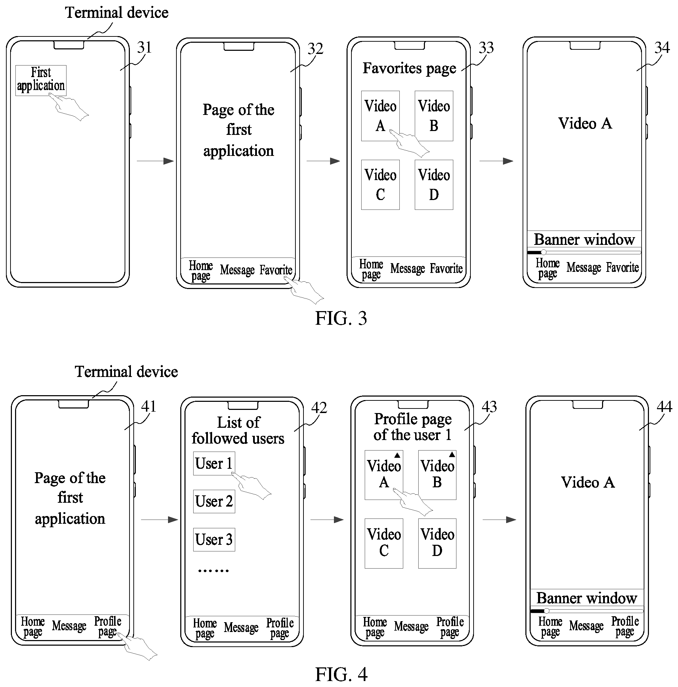

The process of the terminal device displaying the first video based on the first application in this feasible implementation is described below with reference to FIG. 3.

FIG. 3 is a schematic diagram of displaying a first video according to an embodiment of the present disclosure. Referring to FIG. 3, a terminal device is included. For example, the terminal device may include a page 31, a page 32, a page 33, and a page 34. The page 31 displayed by the terminal device is an application page, and the page 31 may include a control of the first application. When the user taps the control of the first application, the display page of the terminal device jumps from the page 31 to the page 32.

Referring to FIG. 3, the page 32 may be a page of the first application. For example, the bottom of the page of the first application includes a home page control, a message control, and a favorite control. When the user taps the favorite control, the display page of the terminal device jumps from the page 32 to the page 33. For example, the page 33 may be a favorites page, and the favorites page may include a video A, a video B, a video C and a video D. For example, the video A may be the first video.

Referring to FIG. 3, when the user taps the video A, the display page of the terminal device jumps from the page 33 to the page 34. For example, the page 34 may be a video playback page, the page 34 may include the video A that is being played, and the bottom of the video A may include a banner window, and a playback progress bar of the video A.

The other feasible implementation is as follows:
displaying a profile page of a posting user of the first video in the first application; and displaying the first video in the first application in response to a touch operation on the first video on the profile page of the posting user of the first video in the first application. For example, the profile page of the posting user of the first video in the first application may include a plurality of posted videos, some of which may be first videos. After the user taps the first video, the terminal device can display the first video in the first application.

Optionally, a user can follow the posting user of the first video in advance within the first application, and then may open the profile page of the posting user of the first video in a following list of the user. For example, the user may follow a plurality of video posting users, and the terminal device may display the following list of the users. When the user taps an icon of any of the video posting users in the following list of the user, the terminal device can display a profile page of the video posting user in the first application. For example, when the user views a video based on the first application, the video that is played in the first application may include an image of the creator of the video. The user may tap the image of the creator in the played video to follow the creator.

Optionally, the profile page of the posting user of the first video may include the first video. For example, a user may create a video A and a video B, the video B is the first video. After the user creates the video A, the user may post the video A, and the profile page of the user may include the video A. After the user creates the video B, the user may post the video B, and the profile page of the user may include the video A and the video B.

The process of the terminal device displaying the first video in the first application in this feasible implementation is described with reference to FIG. 4.

FIG. 4 is another schematic diagram of displaying a first video according to an embodiment of the present disclosure. Referring to FIG. 4, a terminal device is included. For example, a display page of the terminal device may include a page 41, a page 42, a page 43, and a page 44. For example, the page 41 may be a page of the first application, and the page 41 may include a home page control, a message control, and a profile page control. When the user taps the profile page control, the display page of the terminal device jumps from the page 41 to the page 42.

Referring to FIG. 4, the page 42 may include a following list of the user. For example, the following list of the user may include other users followed by the user, such as a user 1, a user 2, a user 3, etc. When the user taps the user 1, the display page of the terminal device jumps from the page 42 to the page 43. For example, the page 43 may be a profile page of the user 1.

Referring to FIG. 4, the profile page of the user 1 may include a video A, a video B, a video C, and a video D. The video A and the video B include marker icons of the first video, that is, the video A and the video B are the first videos. When the user taps the video A, the display page of the terminal device jumps from the page 43 to the page 44. For example, the page 44 may be a video playback page, the page 44 may include the video A that is being played, and the bottom of the video A may include a banner window, and a playback progress bar of the video A.

In the above-mentioned feasible implementation, the terminal device may display the first video in the first application based on a plurality of manners, thereby enhancing the display flexibility of the first video. Moreover, the terminal device may mark the first video (the first video includes a banner window, and other videos do not include banner windows), so that the user can promptly and accurately identify the first video from a page with a plurality of videos, thereby improving the accuracy and efficiency of displaying the first video.

S202: displaying a playback page of the first audio in the first application in response to a touch operation on the banner window.

Optionally, the playback page may be a playback page of the first audio. Optionally, the playback page may include information of the first audio. For example, the playback page may include an image associated with the first audio (which may be an album cover of the first audio, an image of the creator of the first audio, etc., which is not limited in the embodiments of the present disclosure), a playback progress bar of the first audio, a playback control for controlling the playback of the first audio, a fast-forward control of the first audio, and a rewind control of the first audio, etc., which is not limited in the embodiments of the present disclosure.

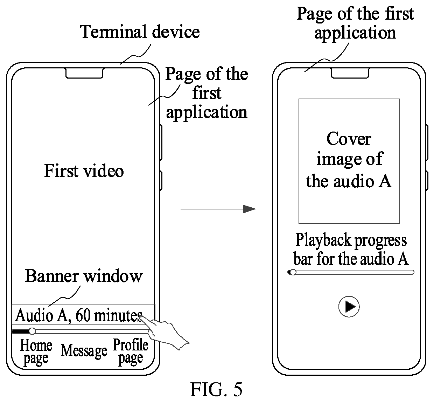

The process of displaying the playback page of the first audio in the first application is described below with reference to FIG. 5.

FIG. 5 is a schematic diagram of a process of displaying a playback page according to an embodiment of the present disclosure. Referring to FIG. 5, a terminal device is included. For example, a display page of the terminal device may be the page of the first application. The page of the first application may be a video playback page. The video playback page may include the first video that is being played, a home page control, a message control, and a profile page control. The bottom of the first video may include a banner window. The banner window may include text information: Audio A, 60 minutes. When the user taps the banner window, the page of the first application of the terminal device may be an audio playback page. For example, the audio playback page may include a cover image of the audio A, a playback progress bar of the audio A, and a playback control for controlling the audio A. In this way, when the user taps the banner window, the terminal device can directly display the playback page of the first audio, without the need to launch the audio application of the first audio, thereby reducing the operational complexity of playing the first audio.

S203: playing the first audio.

Optionally, when the terminal device displays the playback page of the first audio, the terminal device can automatically play the first audio or play the first audio in response to a touch operation of the user on the playback control, and the embodiments of the present disclosure are not limited thereto. For example, when the terminal device displays the playback page of the first audio, the playback control in the playback page may be in a playing state, and the terminal device automatically plays the first audio. For example, when the terminal device displays the playback page of the first audio, the playback control in the playback page may be in a paused state, and after the user taps the playback control, the terminal device can switch the playback control to the playing state and play the first audio in the playback page.

For example, the terminal device may play the first audio based on a feasible implementation as follows: obtaining historical playback progress of the first audio, and playing the first audio on the playback page based on the historical playback progress.

For example, the historical playback progress may refer to playback progress of the first audio over a past period of time. For example, if the first audio associated with the banner window has already played up to the 10th second before the user taps the banner window in the first video, then the historical playback progress of the first audio is up to the 10th second mark; and if the first audio associated with the banner window has already played up to the 3rd minute before the user taps the banner window in the first video, then the historical playback progress of the first audio is up to the 3rd minute.

Optionally, the banner window associated with the first audio may be associated with a plurality of first videos. For example, if the banner window may be associated with the video A and the video B, both the video A and the video B may include the banner windows. When the user taps the banner window of the video A, the terminal device can display the playback page of the first audio that is associated with the banner window in the first application. When the user taps the banner window of the video B, the terminal device can also display the playback page of the first audio that is associated with the banner window in the first application. For example, the banner window of the first audio is located at the bottom of the video A and the video B. After the user taps the banner window in the video A, the terminal device can play the first audio on the playback page. After the playback of the first audio up to the 10th minute, the user closes the playback page of the first audio. If the user then taps the banner window in the video B, the terminal device can determine that the historical playback progress of the first audio is up to the 10th minute.

Optionally, the terminal device may play the first audio on the playback page based on the historical playback progress. For example, if the historical playback progress of the first audio is up to the 10th second, the terminal device can play the first audio from the 10th second on the playback page; and if the historical playback progress of the first audio is at the 20th minute, the terminal device can play the first audio from the 20th minute on the playback page.

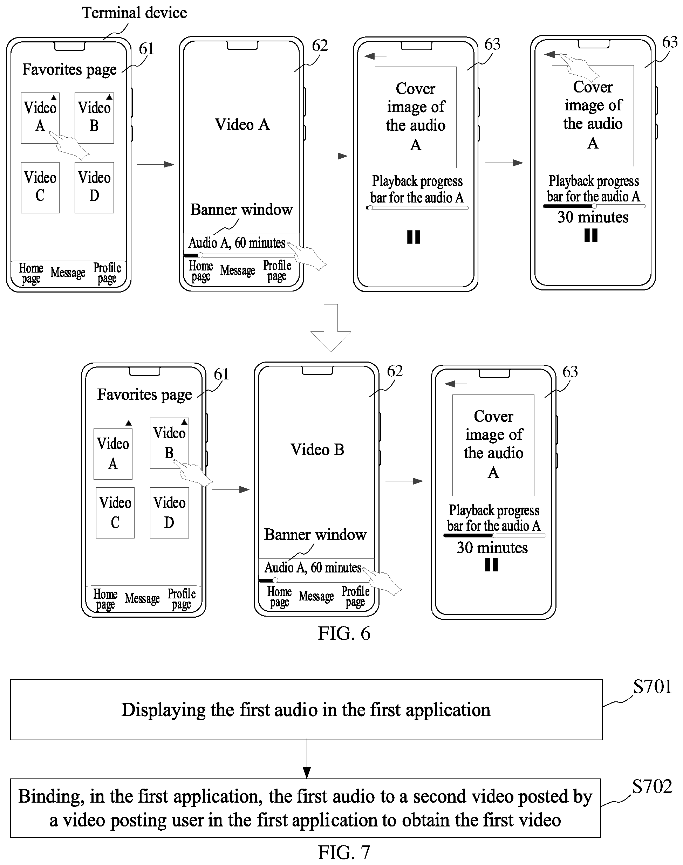

The process of the terminal device playing the first audio on the playback page based on the historical playback progress is described below with reference to FIG. 6.

FIG. 6 is a schematic diagram of playing a first audio according to an embodiment of the present disclosure. Referring to FIG. 6, a terminal device is included. For example, a display page of the terminal device may be a page of the first application, and the display page of the terminal device may include a page 61, a page 62, and a page 63. For example, the page 61 is a favorites page, and the page 61 may include a video A, a video B, a video C, and a video D, where the video A and the video B include markers of the first video.

Referring to FIG. 6, when the user taps the video A, the display page of the terminal device jumps from the page 61 to the page 62. The page 62 may be a video playback page, and the video playback page includes the video A that is being played, a playback progress bar of the video A, and a banner window. For example, the text content included by the banner window is: Audio A, 60 minutes. That is, the banner window is associated with the audio A in the second application.

Referring to FIG. 6, when the user taps the banner window in the video A, the display page of the terminal device jumps from the page 62 to the page 63. The page 63 may be an audio playback page, and the page 63 may include a return control, a cover image of the audio A, a playback progress bar of the audio A, and a playback control. The playback control is in the playing state, and the terminal device plays the audio A in the page 63.

Referring to FIG. 6, when the playback of the audio A is up to the 30th minute, the user taps the return control on the page 63, and the terminal device jumps from the page 63 to the page 61 (the favorites page). When the user then taps the video B on the page 61, the display page of the terminal device jumps from the page 61 to the page 62. The page 62 includes the video B that is being played, a playback progress bar of the video B, and a banner window. The banner window includes text: Audio A, 60 minutes. That is, the banner window is also associated with the audio A.

Referring to FIG. 6, when the user taps the banner window in the video B, the display page of the terminal device jumps from the page 62 to the page 63. The page 63 may include a return control, a cover image of the audio A, a playback progress bar of the audio A, and a playback control. The playback control is in the playing state, and the terminal device resumes playing the audio A from the 30th minute of the audio A (i.e., the terminal device resumes playing the audio A from the historical playback progress of the audio A) on the page 63. **In** this way, the terminal device can play the first audio based on the historical playback progress, thereby improving the playback accuracy of the first audio, and the user can resume listening to the first audio from a position where the playback of the first audio was last interrupted, thereby enhancing the user experience.

Embodiments of the present disclosure provide the video processing method. The terminal device may display the video favorites page in the first application. The terminal device may display the first video in the first application in response to a touch operation on the first video on the video favorites page. The terminal device may display the playback page of the first audio in the first application in response to a touch operation on the banner window in the first video. The terminal device may obtain the historical playback progress of the first audio and play the first audio on the playback page based on the historical playback progress. **In** this way, based on the touch operation of the user on the banner window, the terminal device can directly play the audio from the second application in the first application, without the need for the user to open the second application on the terminal device, so as to reduce the operational complexity of playing the first audio. Moreover, the terminal device can play the first audio based on the historical playback progress, so that the user can resume listening to the first audio from a position where the playback of the first audio was last interrupted, thereby improving the playback accuracy of the first audio and enhancing the user experience.

On the basis of the embodiment shown in FIG. 2, before the terminal device displays the first video based on the first application, a method of generating the first video is further included in the above-mentioned video processing method. The method of generating the first video is described below with reference to FIG. 7.

FIG. 7 is a schematic diagram of a method of generating a first video according to an embodiment of the present disclosure. Referring to FIG. 7, the method includes the following steps.

S701: displaying the first audio in the first application.

For example, because the first audio is an audio posted in the second application, so, in order to display the first audio in the first application, the terminal device can bind the first application with the second application in advance. For example, the terminal device may acquire a link (rss) that is associated with the profile page of the posting user of the first audio in the second application and bind the rss link in the first application. In this way, the first audio can be displayed in the first application.

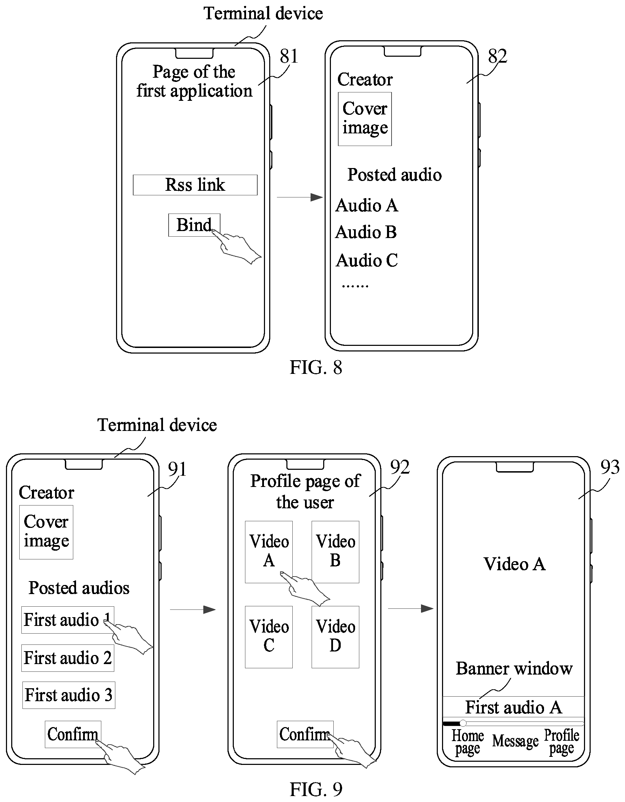

The process of displaying the first audio in the first application is described below with reference to FIG. 8.

FIG. 8 is a schematic diagram of a process of displaying a first audio according to an embodiment of the present disclosure. Referring to FIG. 8, a terminal device is included. For example, a display page of the terminal device may include a page 81 and a page 82, both of which are pages of the first application. For example, the page 81 may include an input field and a bind control. The user may enter the rss link of the creator in the second application into the input field and tap the bind control, and the display page of the terminal device can jump from the page 81 to the page 82. For example, the page 82 may include information related to the creator. For example, the page 82 may include the name of the creator, the cover image associated with the creator, and audio A, audio B, audio C and other audios that are posted by the creator. For example, the audio A, the audio B, and the audio C may be the first audios in the embodiments of the present disclosure. In this way, the terminal device can achieve the effect of displaying the first audio from the second application in the first application by binding the rss link of the user of the second application in the first application.

It should be noted that binding the rss link of the user of the second application in the first application by the terminal device is a pre-processing step. After the rss link of the user is successfully bound in the first application, the terminal device does not need to repeat the binding operation when the terminal device next displays the first audio posted by the user in the second application. If the terminal device needs to display a first audio posted by a new user in the second application, the terminal device can re-bind the rss link of the new user from the second application to the first application.

S702: binding in the first application, the first audio with a second video posted by the video posting user in the first application to obtain the first video.

For example, the terminal device may bind, in the first application, the first audio with the second video posted by the video posting user in the first application to obtain the first video based on a feasible implementation as follows: displaying a profile page of the video posting user in the first application in response to a touch operation on the first audio, and binding the first audio with the second video in response to a touch operation on the second video on the profile page of the video posting user, so as to obtain the first video.

For example, the second video may be a video posted by the video posting user within a historical period of time. For example, the profile page of the video posting user may include at least one second video. For example, the profile page of the video posting user may include all the videos posted by the user within the historical period of time. For example, in the embodiment shown in FIG. 4, a video A, a video B, a video C and a video D are posted on the profile page of the user 1. Because the video A and the video B include banner windows, the video A and the video B may be the first videos. Because the video C and the video D do not include banner windows, the video C and the video D may be second videos. That is, the second video may be a video posted by the user that is not bound to the first audio.

Optionally, after the terminal device displays the profile page of the video posting user, the user may perform the touch operation to at least one second video on the profile page, and then may bind the first audio with the at least one second video touched by the user, so as to obtain the first video. For example, the profile page of the video posting user may include a second video A, a second video B, and a second video C. If the user performs touch to the second video A and the second video B, the terminal device can bind the second video A with the first audio to obtain a first video 1, and the terminal device can bind the second video B with the first audio to obtain a first video 2. Video content of the first video 1 is the same as video content of the second video A, and video content of the first video 2 is the same as video content of the second video B. Both the first video 1 and the second video 2 include banner windows associated with the first audio.

The process of the terminal device generating the first video is described below with reference to FIG. 9.

FIG. 9 is a schematic diagram of a process of generating a first video according to an embodiment of the present disclosure. Referring to FIG. 9, a terminal device is included. For example, a display page of the terminal device includes a page 91, a page 92, and a page 93. For example, the page 91 may include the name of the creator of the audio, the cover image associated with the creator, a first audio 1, a first audio 2, and a first audio 3 that are posted by the creator, and a confirm control. After the user taps the first audio A and the confirm control, the display page of the terminal device jumps from the page 91 to the page 92.

Referring to FIG. 9, the page 92 may be a profile page of a video posting user. The profile page of the video posting user may include a video A, a video B, a video C, a video D and a confirm control (the videos are all second videos). After the user taps the video A and the confirm control, the terminal device can bind the video A with the first audio 1 and jump to the page 93. The page 93 may be a preview page of the first video obtained after binding the video A with the first audio. The page 93 may include the video A, playback progress of the video A, and a banner window. The banner window may include text content: first audio A. In this way, the terminal device can bind the first audio with at least one second video in advance, so that the user can jump directly to the playback page of the first audio based on the first video obtained after the binding, thereby reducing the operational complexity of playing the first audio.

Embodiments of the present disclosure provide a method of generating the first video. The first audio is displayed in the first application. In response to a touch operation on the first audio, the profile page of the video posting user is displayed in the first application. In response to a touch operation on the second video on the profile page of the video posting user, the first audio is bound with the second video to obtain the first video. In this way, the terminal device can bind the first audio to a plurality of second videos to obtain a plurality of first videos. When the user views the first video based on the first application, the terminal device can directly play the first audio of second application associated with the banner window in the first application, based on the touch operation of the user on the banner window, thereby reducing the operational complexity of playing the first audio, and enhancing the user experience.

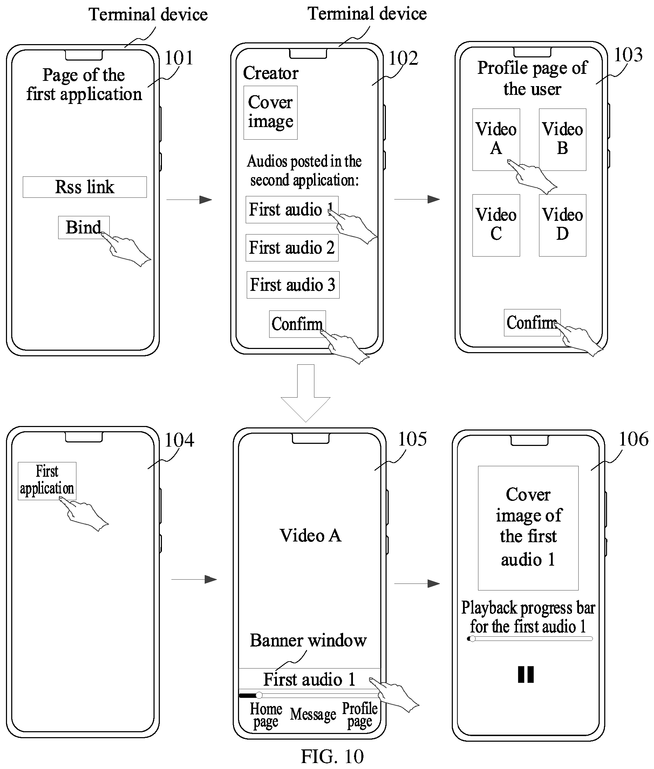

On the basis of any of the above-described embodiments, a process of the above-described video processing method is described below with reference to FIG. 10.

FIG. 10 is a schematic diagram of a process of a video processing method according to an embodiment of the present disclosure. Referring to FIG. 10, a terminal device is included. For example, a display page of the terminal device may include a page 101, a page 102, a page 103, a page 104, a page 105, and a page 106. All the display pages of the terminal device are pages of the first application. The page 101 may include an input field and a bind control. After the user enters the rss link of the profile page of the creator in the second application into the input field and taps the bind control, the display page of the terminal device jumps from the page 101 to the page 102.

Referring to FIG. 10, the page 102 includes the name of the creator, a cover image associated with the creator, an audio posted by the creator in the second application, and a confirm control. The audio posted by the creator in the second application may include a first audio 1, a first audio 2, and a first audio 3. After the user taps the first audio 1 and taps the confirm control, the display page of the terminal device jumps from the page 102 to the page 103.

Referring to FIG. 10, the page 103 is a user profile page of a user posting videos in the first application, and the user profile page may include a video A, a video B, a video C, a video D, and a confirm control. Each video on the user profile page is a second video. After the user taps the video A and taps the confirm control, the terminal device can bind the first audio 1 with the video A to obtain the first video.

Referring to FIG. 10, the page 104 is an application page of the terminal device, where the application page may include the first application. After the terminal device binds the first audio 1 with the video A, the user can close the first application. The terminal device can display the page 104. After the user taps the first application on the page 104, the display page of the terminal device can jump from the page 104 to the page 105.

Referring to FIG. 10, the page 105 is a video playback page of the first application, where the video playback page may be playing a video A. The bottom of the video A includes a banner window associated with the first audio 1 and a video playback progress bar. The banner window includes text: first audio 1. When the user taps the banner window, the display page of the terminal device jumps from the page 105 to the page 106.

Referring to FIG. 10, the page 106 is a playback page of the first audio 1. The playback page may include a cover image of the first audio 1, a playback progress bar for the first audio 1, and a playback control. The playback control may be in the playing state. In this way, after the user binds the video A with the first audio 1, when the user browses the video A again based on the first application, the user can tap the banner window at the bottom of the video A, so that the first application displays the playback page of the first audio 1, so as to reduce the operational complexity for the user to play the first audio and enhance the user experience.

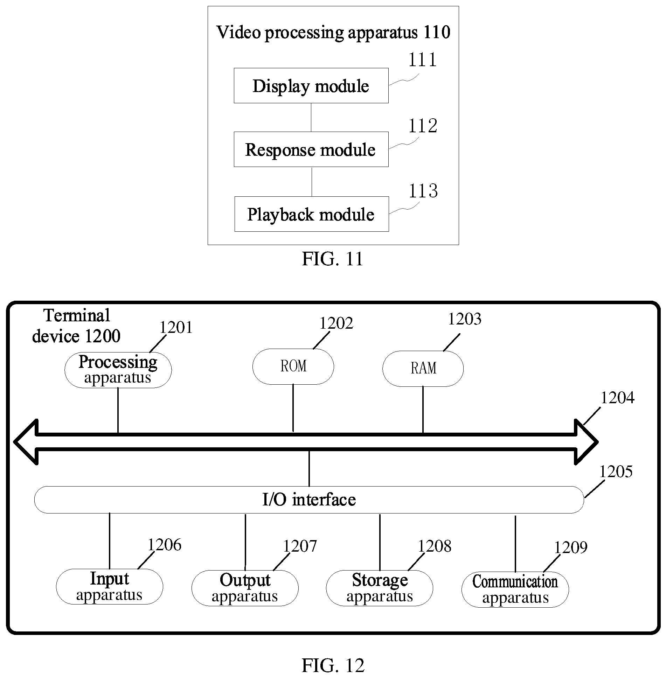

FIG. 11 is a schematic structural diagram of a video processing apparatus according to an embodiment of the present disclosure. Referring to FIG. 11, the video processing apparatus 110 includes a display module 111, a response module 112, and a playback module 113, where
the display module 111 is configured to display a first video based on a first application, where the first video includes a banner window, and the banner window is associated with a first audio posted in a second application;
the response module 112 is configured to display a playback page of the first audio in the first application in response to a touch operation on the banner window; and
the playback module 113 is configured to play the first audio.

According to one or more embodiments of the present disclosure, the display module 111 is, for example, configured to:
display a video favorites page in the first application; and
display the first video in the first application in response to a touch operation on the first video on the video favorites page.

According to one or more embodiments of the present disclosure, the display module 111 is, for example, configured to:
display a profile page of a posting user of the first video in the first application; and
display the first video in the first application in response to a touch operation on the first video on the profile page of the posting user of the first video in the first application.

According to one or more embodiments of the present disclosure, the banner window is located at the bottom of the first video and includes audio information that is associated with the first audio.

According to one or more embodiments of the present disclosure, the playback module 113 is, for example, configured to:
obtain historical playback progress of the first audio; and
play the first audio on the playback page based on the historical playback progress.

According to one or more embodiments of the present disclosure, the display module 111 is further configured to:
display the first audio in the first application; and
bind, in the first application, the first audio with a second video posted by a video posting user in the first application to obtain the first video.

According to one or more embodiments of the present disclosure, the display module 111 is, for example, configured to:
display a profile page of the video posting user in the first application in response to a touch operation on the first audio; and
bind the first audio with the second video to obtain the first video in response to a touch operation on the second video on the profile page of the video posting user.

The video processing apparatus provided in this embodiment of the present disclosure may be configured to perform the technical solution of the above-mentioned method embodiment. The implementation principles and technical effects thereof are similar, which are not repeated in this embodiment.

FIG. 12 is a schematic structural diagram of a terminal device according to an embodiment of the present disclosure. Referring to FIG. 12, which is a schematic structural diagram of a terminal device 1200 suitable for implementing an embodiment of the present disclosure. For example, the terminal device may include, but is not limited to, a mobile terminal such as a mobile phone, a notebook computer, a digital broadcast receiver, a personal digital assistant (PDA), a tablet computer (portable Android device, PAD), a portable media player (PMP), and a vehicle-mounted terminal (such as a vehicle navigation terminal), and a fixed terminal such as a digital TV and a desktop computer. The terminal device shown in FIG. 12 is merely an example, and shall not impose any limitation on the function and scope of use of the embodiments of the present disclosure.

As shown in FIG. 12, the terminal device 1200 may include a processing apparatus (for example, a central processing unit or a graphics processing unit) 1201 that may perform a variety of appropriate actions and processing based on a program stored in a read-only memory (ROM) 1202 or a program loaded from a storage apparatus 1208 into a random access memory (RAM) 1203. The RAM 1203 further stores various programs and data required for the operation of the terminal device 1200. The processing apparatus 1201, the ROM 1202, and the RAM 1203 are connected to one another through a bus 1204. An input/output (I/O) interface 1205 is also connected to the bus 1204.

Generally, the following apparatus may be connected to the I/O interface 1205: an input apparatus 1206 including, for example, a touchscreen, a touchpad, a keyboard, a mouse, a camera, a microphone, an accelerometer, and a gyroscope; an output apparatus 1207 including, for example, a liquid crystal display (LCD), a speaker, and a vibrator; the storage apparatus 1208 including, for example, a magnetic tape and a hard disk drive; and a communication apparatus 1209. The communication apparatus 1209 may allow the terminal device 1200 to perform wireless or wired communication with other devices to exchange data. Although FIG. 12 shows the terminal device 1200 having various apparatus, it should be understood that it is not required to implement or have all of the shown apparatus. It may be an alternative to implement or have more or fewer apparatus.

In particular, according to the embodiments of the present disclosure, the process described above with reference to the flowchart may be implemented as a computer software program. For example, an embodiment of the present disclosure includes a computer program product, which includes a computer program carried on a computer-readable medium, where the computer program includes program code for performing the method shown in the flowchart. In such an embodiment, the computer program may be downloaded and installed from a network through the communication apparatus 1209, installed from the storage apparatus 1208, or installed from the ROM 1202. When the computer program is executed by the processing apparatus 1201, the above-mentioned functions defined in the method of the embodiments of the present disclosure are performed.

It should be noted that the above-mentioned computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. More specific examples of the computer-readable storage medium may include, but are not limited to: an electrical connection having one or more wires, a portable computer magnetic disk, a hard disk drive, a random access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. **In** the present disclosure, the computer-readable storage medium may be any tangible medium containing or storing a program which may be used by or in combination with an instruction execution system, apparatus, or device. **In** the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may further be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), and the like, or any suitable combination thereof.

The above-mentioned computer-readable medium may be included in the above-mentioned terminal device. Alternatively, the computer-readable medium may exist independently, without being assembled into the terminal device.

The above-mentioned computer-readable medium carries one or more programs that, when executed by the terminal device, cause the terminal device to perform the method shown in the above-mentioned embodiment.

An embodiment of the present disclosure provides a computer-readable storage medium storing computer-executable instructions that, when executed by a processor, cause various methods possibly involved in the above embodiments to be implemented.

An embodiment of the present disclosure provides a computer program product including a computer program that, when executed by a processor, causes various methods possibly involved in the above embodiments to be implemented.

The computer program code for performing the operations in the present disclosure may be written in one or more programming languages or a combination thereof, where the programming languages include an object-oriented programming language, such as Java, Smalltalk, or C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user via any kind of network, including a local area network (LAN) or a wide area network (WAN), or may be connected to an external computer (for example, connected via the Internet with the aid of an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. Names of the units do not constitute a limitation on the units themselves in some cases, for example, a first obtaining unit may alternatively be described as "a unit for obtaining at least two internet protocol addresses".

The functions described herein above may be performed at least partially by one or more hardware logic components. For example, without limitation, example types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk drive, a random access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

According to at least one embodiment of the present disclosure, a video processing method is provided. The method includes: displaying a first video based on a first application, where the first video includes a banner window, and the banner window is associated with a first audio posted in a second application; displaying a playback page of the first audio in the first application in response to a touch operation on the banner window.

In an example, displaying the first video based on the first application includes: displaying a video favorites page in the first application; and displaying the first video in the first application in response to a touch operation on the first video in the video favorites page.

In an example, displaying the first video based on the first application includes: displaying a profile page of a posting user of the first video in the first application; and displaying the first video in the first application in response to a touch operation on the first video on the profile page of the posting user of the first video in the first application.

In an example, the banner window is located at the bottom of the first video and includes audio information that is associated with the first audio.

In an example, playing the first audio includes: obtaining historical playback progress of the first audio; and playing the first audio on the playback page based on the historical playback progress.

In an example, before displaying the first video based on the first application, the method further includes: displaying the first audio in the first application; and binding, in the first application, the first audio to a second video posted by a video posting user in the first application to obtain the first video.

In an example, binding, in the first application, the first audio to the second video posted by the video posting user in the first application to obtain the first video includes: displaying a profile page of the video posting user in the first application in response to a touch operation on the first audio; and binding the first audio with the second video to obtain the first video in response to a touch operation on the second video on the profile page of the video posting user.

According to at least one embodiment of the present disclosure, a video processing apparatus is provided. The apparatus includes: a display module, a response module, and a playback module, where the display module is configured to display a first video based on a first application, where the first video includes a banner window, and the banner window is associated with a first audio posted in a second application; the response module is configured to: display a playback page of the first audio in the first application in response to a touch operation on the banner window; and the playback module is configured to play the first audio.

It should be noted that the modifier "at least one" mentioned in the present disclosure is illustrative and not restrictive, and those skilled in the art should understand that unless the context clearly indicates otherwise, the modifier should be understood as "one or more".

The names of messages or information exchanged between a plurality of apparatuses in the implementations of the present disclosure are used for illustrative purposes only, and are not used to limit the scope of these messages or information.

It can be understood that before the use of the technical solutions disclosed in the embodiments of the present disclosure, the user shall be informed of the type, range of use, use scenarios, etc., of personal information involved in the present disclosure in an appropriate manner in accordance with the relevant laws and regulations, and the authorization of the user shall be obtained.

For example, in response to reception of an active request from the user, prompt information is sent to the user to clearly inform the user that a requested operation will require access to and use of the personal information of the user. As such, the user can independently choose, based on the prompt information, whether to provide the personal information to software or hardware, such as an electronic device, an application, a server, or a storage medium, that performs operations in the technical solutions of the present disclosure. In an alternative but non-limiting implementation, in response to the reception of the active request from the user, the prompt information may be sent to the user in the form of, for example, a pop-up window, in which the prompt information may be presented in text. Furthermore, the pop-up window may further include a selection control for the user to choose whether to "agree" or "disagree" to provide the personal information to the electronic device.

It can be understood that the above-mentioned process of notifying and obtaining the authorization of the user is only illustrative and does not constitute a limitation on the implementations of the present disclosure, and other manners that satisfy the relevant laws and regulations may also be applied in the implementations of the present disclosure.

It can be understood that the data involved in the technical solutions (including, but not limited to, the data itself and the access to or use of the data) shall comply with the requirements of corresponding laws, regulations, and relevant provisions. The data may include information, parameters, messages, etc., such as traffic split indication information.

The foregoing descriptions are merely exemplary embodiments of the present disclosure and explanations of the applied technical principles. Those skilled in the art should understand that the scope of disclosure involved in the present disclosure is not limited to the technical solutions formed by specific combinations of the above-mentioned technical features, and shall also cover other technical solutions formed by any combination of the above-mentioned technical features or equivalent features thereof without departing from the above-mentioned disclosed concept. For example, a technical solution formed by a replacement of the above-mentioned features with technical features with similar functions disclosed in the present disclosure (but not limited thereto) also falls within the scope of the present disclosure.

In addition, although the various operations are depicted in a specific order, it should not be construed as requiring these operations to be performed in the specific order shown or in a sequential order. Under certain circumstances, multitasking and parallel processing may be advantageous. Similarly, although several exemplary implementation details are included in the foregoing discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. In contrast, the specific features and actions described above are merely example forms of implementing the claims.

## Claims

1. A video processing method, comprising:
displaying a first video based on a first application, wherein the first video comprises a banner window, and the banner window is associated with a first audio posted in a second application;
displaying a playback page of the first audio in the first application in response to a touch operation on the banner window; and
playing the first audio.

2. The method according to claim 1, wherein displaying the first video based on the first application comprises:
displaying a video favorites page in the first application; and
displaying the first video in the first application in response to a touch operation on the first video on the video favorites page.

3. The method according to claim 1, wherein displaying the first video based on the first application comprises:
displaying a profile page of a posting user of the first video in the first application; and
displaying the first video in the first application in response to a touch operation on the first video on the profile page of the posting user of the first video in the first application.

4. The method according to any one of claims 1 to 3, wherein the banner window is located at the bottom of the first video and comprises audio information that is associated with the first audio.

5. The method according to any one of claims 1 to 3, wherein playing the first audio comprises:
obtaining historical playback progress of the first audio; and
playing the first audio on the playback page based on the historical playback progress.

6. The method according to any one of claims 1 to 3, wherein before displaying the first video based on the first application, the method further comprises:
displaying the first audio in the first application; and
binding, in the first application, the first audio with a second video posted by a video posting user in the first application to obtain the first video.

7. The method according to claim 5, wherein binding, in the first application, the first audio to the second video posted by the video posting user in the first application to obtain the first video comprises:
displaying a profile page of the video posting user in the first application in response to a touch operation on the first audio; and
binding the first audio with the second video to obtain the first video in response to a touch operation on the second video on the profile page of the video posting user.

8. A video processing apparatus, comprising: a display module, a response module, and a playback module, wherein
the display module is configured to display a first video based on a first application, wherein the first video comprises a banner window, and the banner window is associated with a first audio posted in a second application;
the response module is configured to display a playback page of the first audio in the first application in response to a touch operation on the banner window; and
the playback module is configured to play the first audio.

9. A terminal device, comprising: a processor and a memory, wherein
the memory stores computer-executable instructions; and
the processor executes the computer-executable instructions stored in the memory, to cause the processor to perform the video processing method according to any one of claims 1 to 7.

10. A computer-readable storage medium, wherein computer-executable instructions are stored in the computer-readable storage medium, when the computer-executable instructions are executed by a processor, the video processing method according to any one of claims 1 to 7 is implemented.
